(19) Europäisches Patentamt
European Patent Office
Office européen des brevets

(11) **EP 3 918 124 B1**

(12) **EUROPEAN PATENT SPECIFICATION**

(45) Date of publication and mention
of the grant of the patent:
**21.05.2025 Bulletin 2025/21**

(21) Application number: **20749796.7**

(22) Date of filing: **30.01.2020**

(51) International Patent Classification (IPC):
*D06F 33/44* (2020.01)    *D06F 33/70* (2020.01)
*D06F 34/32* (2020.01)    *D06F 25/00* (2006.01)
*D06F 29/00* (2006.01)    *D06F 34/05* (2020.01)
*D06F 34/06* (2020.01)    *D06F 101/14* (2020.01)
*D06F 105/50* (2020.01)    *D06F 105/56* (2020.01)

(52) Cooperative Patent Classification (CPC):
**D06F 33/44; D06F 33/70; D06F 34/32;** D06F 25/00;
D06F 29/005; D06F 34/05; D06F 34/06;
D06F 2101/14; D06F 2105/50; D06F 2105/56

(86) International application number:
**PCT/KR2020/001415**

(87) International publication number:
**WO 2020/159248 (06.08.2020 Gazette 2020/32)**

(54) **LAUNDRY TREATING APPARATUS**

WÄSCHEBEHANDLUNGSVORRICHTUNG

APPAREIL DE TRAITEMENT DE LINGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2019 KR 20190013431**

(43) Date of publication of application:
**08.12.2021 Bulletin 2021/49**

(73) Proprietor: LG Electronics Inc.
**Seoul 07336 (KR)**

(72) Inventors:
• **KWON, Baekeun**
**Seoul 08592 (KR)**

• **BAE, Yonggyung**
**Seoul 08592 (KR)**

(74) Representative: **Ter Meer Steinmeister & Partner
Patentanwälte mbB
Nymphenburger Straße 4
80335 München (DE)**

(56) References cited:
EP-A1- 3 396 051       JP-A- 2005 185 460
JP-A- 2007 236 538    JP-A- 2014 150 999
KR-A- 20120 080 082    KR-A- 20180 119 486
US-A1- 2014 222 168    US-A1- 2018 048 152

# EP 3 918 124 B1

## Description

## Technical Field

The present invention relates to a laundry treating apparatus.

## Background Art

In general, a laundry treating apparatus is a home appliance configured to perform such diverse treating processes that are related with clothes (e.g., washing, drying, deodorizing, wrinkle-removing and the like). The laundry treating apparatus means a concept including a washing machine for washing clothes, a dryer for drying wet clothes and a refresher for deodorizing the bad smell pervaded in clothes or removing wrinkles of clothes.

Also, laundry treating apparatuses can be classified into a top loading type and a front loading type based on a direction of laundry loading/unloading. A typical example of such a front loading type laundry treating apparatus is a drum washer or dryer.

In the case of the front loading type, an introduction port through which the laundry is introduced is provided at the front side (or lateral side) of the cabinet and a drum shaft is horizontal or tilted a preset angle with respect to the ground. In the case of the top loading type, the introduction port through which the laundry is introduced is vertically provided on the top of the cabinet with respect to the ground.

Typically, such the laundry treating apparatus may be configured to perform a wash cycle or a dry cycle after a user loads clothes (hereinafter, laundry) and the user is able to load the laundry out of the laundry treating apparatus until waiting for the wash cycle or the dry cycle is completed.

However, it becomes difficult to wait until the wash cycle or the dry cycle is completed, because one-person households or double-income families are increasing drastically and for other reasons. Accordingly, the laundry is likely to be neglected in the laundry treating apparatus, even after the dry cycle or the wash cycle is completed, such that it might be contaminated to disadvantageously change a state of the laundry bad (e.g., smell bad or cause wrinkles).

In addition, the users who have no time on their hands for operating the laundry treating apparatus after work until bed time are increasing. Accordingly, the situations where users have to postpone the operation of the laundry treating apparatus might happen frequently.

To solve such disadvantages, a time reservation setting function is added to such the laundry treating apparatus for users to directly set a start time or an end time of the wash cycle or the dry cycle.

Accordingly, the users are able to set the wash cycle or dry cycle to end at the time they want and maximize convenience and autonomy may be maximized. As one example, a user is able to control the operation of the laundry treating apparatus to end at the end of the bed time or spare time so as to unload the optimal-stated laundry out of the laundry treating apparatus according to the user's schedule.

However, the laundry treating apparatus has a limit that the user has to repeatedly input some buttons to set a desired reservation time, because the area of the control panel has to be arranged efficiently and exterior beauty has to be considered.

Even when an application or external terminal is used, the user always has to inconveniently input a desired reservation time whenever setting the reservation time. especially, even when trying to reputedly perform a reservation setting at certain times or at a specific time, the user has to directly set the reservation time consistently, which is an inconvenient disadvantage. Accordingly, a conventional laundry treating apparatus has a disadvantage that the repeated process and time for performing the reservation time setting function have to be performed disadvantageously.

EP 3 396 051 A1 presents a laundry treating apparatus in which a recommendation formula is previously stored to compute and determine a course and option to be recommended. The laundry treating apparatus comprising: a recommendation request unit to receive input that enables a recommendation of a laundry treating course from among arbitrary courses or a recommendation of a laundry treating option from among arbitrary options; a controller for computing and determining a course or option to be recommended from the arbitrary courses or the arbitrary options in accordance with a recommendation formula when a recommendation request unit is input; and a display unit for displaying the course or option determined to be recommended by the controller. The controller has the recommendation formula which is previously stored, and is provided to compute and determine the course or option to be recommended.

US 2014/222168 A1 provides a method of controlling a component for a network system. The method of controlling a component for a network system, which is communicable with the other component, includes recognizing energy information or additional information except for the energy information; and providing recommended information related to an operation of the component within a recommended range on the basis of the recognized energy information or the additional information.

US 2018/048152 A1 presents an electronic system for power consumption management of one or more domestic appliances which is routinely informed on actual energy tariff through a network control unit or through a predetermined time-table stored in the system. A user interface of the electronic system is provided where the user can set his preference concerning the switch-on time of each appliance and/or function thereof and read the related estimated energy consumption and/or energy cost of the appliance working program.

## Disclosure of Invention

### Technical Problem

Accordingly, an object of the present invention is to address the above-noted and other problems and provide a laundry treating apparatus which recommends a specific reservation time based on the reservation time setting history to the user.

Another object of the present disclosure is to provide a laundry treating apparatus which figures out a specific pattern from a reservation setting history and then recommend a reservation time which will be set by the user based on the specific pattern.

Another object of the present invention is to provide a laundry treating apparatus which calculates an user pattern, when a reservation time is set at a specific time at a specific frequency or more, and recommends a reservation time which will be set to the user based on the user pattern.

Another object of the present disclosure is to provide a laundry treating apparatus which may allow the user to input a new reservation time again even when the reservation time is recommended and correct the reservation time.

Another object of the present disclosure is to provide a laundry treating apparatus which may check whether a new pattern is created in another reservation pattern, when the pattern of the reservation time is set, and set a new reservation pattern based on the result of the checking.

Another object of the present disclosure is to provide a laundry treating apparatus which may figure out a plurality of patterns in the reservation time setting and recommend a reservation time based on the patterns.

Another object of the present disclosure is to provide a laundry treating apparatus which may recommend a plurality of reservation times

### Solution to Problem

One or more of the above mentioned objects are achieved by the invention set out by the features of the independent claim. The preferred embodiments are defined by the features of the dependent claims.

The present invention provides a laundry treating apparatus that is configured to recommend one or more of the start point and end point of at least one of a wash cycle for removing foreign substances from laundry and a dry cycle for removing moisture from the laundry, the laundry treating apparatus comprising: an input part that is configured to receive an input for setting one or more of the start point and end point of the wash cycle or dry cycle; a controller that is configured to determine one or more of the start point and end point of the wash cycle or dry cycle, when the input of the input part is sensed; and a display that is configured to display one or more of the start point and end point of the wash cycle or dry cycle determined by the controller.

The controller determines one or more of the start point and end point simultaneously when sensing the input from the input part.

The input part comprises a requesting unit configured to receive a command for facilitating the controller pre-determining one or more of the start point and end point, and the controller may determine one or more of the start point and end point when sensing that the requesting unit is input.

The controller determines one or more of the start point and end point of the wash cycle or dry cycle by figuring out a pattern based on one or more of the former set start point and end point. The controller may confirm the pattern when sensing that one or more of the start point and end point is set in a specific time range at a specific frequency or more. The controller may determine a specific time in the pattern and the determined time to be the start or end point. The controller may determine one or more of the start point and end point of the wash cycle or dry cycle in the specific time range, once confirming the pattern.

The controller may determine whether an additional pattern is confirmed or the confirmed pattern is changed, after confirming the pattern.

The controller may ignore the start or end point when confirming the additional pattern or changing the confirmed pattern, once the start or end point of the wash cycle or dry cycle within the specific time range is input.

The controller confirms the setting of the start or end point in a different specific time range at a specific frequency or more as the additional pattern or changes the confirmed pattern, when sensing that the start or end point is set in the different specific time range at a specific frequency or more after the confirming of the pattern.

The controller may determine two or more of the start or end points that are selected by the user.

Even when the start or end point of the wash cycle or dry cycle determined by the controller is displayed on the display, the input part may be configured to facilitate an input of a new start or end point.

The controller may use even the input start or end point in figuring out the pattern, when a new start or end point is input to the input part.

The laundry treating apparatus may further comprise a communication module that is configured to transmit information for facilitating the controller to determine the start or end point of the wash cycle or dry cycle by means of communication with a server or an external terminal, wherein the controller may determine the start or end point based on the information transmitted from the server or the external terminal.

The controller may transmit the start or end point of the performed operation to the server or the externa terminal via the communication module, when the start or end point of the operation is set or the wash cycle or dry cycle is completed at the time set as the start or end point of the operation.

## Advantageous Effects of Invention

According to the present invention, the laundry treating apparatus has following effects.

First, the laundry treating apparatus recommends a specific reservation time based on the reservation time setting history to the user.

In addition, the laundry treating apparatus figures out a specific pattern from a reservation setting history and then recommend a reservation time which will be set by the user based on the specific pattern.

In addition, the laundry treating apparatus calculates a user pattern, when a reservation time is set at a specific time at a specific frequency or more, and recommend a reservation time which will be set to the user based on the user pattern.

In addition, the laundry treating apparatus may allow the user to input a new reservation time again even when the reservation time is recommended and correct the reservation time.

In addition, the laundry treating apparatus may check whether a new pattern is created in another reservation pattern, when the pattern of the reservation time is set, and set a new reservation pattern based on the result of the checking.

In addition, the laundry treating apparatus may figure out a plurality of patterns in the reservation time setting and recommend a reservation time based on the patterns.

In addition, the laundry treating apparatus may recommend a plurality of reservation times.

## Brief Description of Drawings

The present invention will become more fully understood from the detailed description given herein below and the accompanying drawings, which are given by illustration only, and thus are not limitative of the present invention, and wherein:

FIG. 1 is a diagram illustrating examples of a laundry treating apparatus according to the present disclosure;
FIG. 2 is a diagram illustrating an inner structure of the laundry treating apparatus;
FIG. 3 is a diagram illustrating an online system for the laundry treating apparatus;
FIG. 4 is a diagram illustrating one example that is configured to set a reservation time in the laundry treating apparats;
FIG. 5 is a diagram illustrating one example that is configured to control the laundry treating apparatus to automatically recommend a reservation time;
FIG. 6 is a diagram illustrating that a reservation time is set via an external terminal based on an online system according to one embodiment of the present disclosure;
FIG. 7 is a diagram illustrating one embodiment that a user's pattern is confirmed based on a history of reservation time setting in the laundry treating apparatus;
FIG. 8 is a diagram illustrating one embodiment that a new pattern is additionally confirmed in the laundry treating apparatus;
FIG. 9 is a diagram illustrating one embodiment that a user re-set a reservation time even the online system recommend a reservation time;
FIG. 10 is a diagram illustrating one embodiment of a control method of the laundry treating apparatus and the online system according to the present disclosure.

## Mode for the Invention

Referring to the accompanying drawings, exemplary embodiments of the present disclosure will be described in detail. Regardless of numeral references, the same or equivalent components may be provided with the same reference numbers and description thereof will not be repeated. If the terms disclosed in this specification conflict with general terms, the terms may be understood on the basis of their meanings as used in this specification. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings. A singular representation may include a plural representation unless it represents a definitely different meaning from the context. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

A laundry treating apparatus may typically provide diverse courses and options according to a user's convenience. Such courses and options may include both a washing course that is used in a washer and a drying course that is used in a dryer.

Hereinafter, the present disclosure is described based on the courses that include the washing course that is applied to the washer and that is only to make the description easier. The course has to be understood to be a concept that includes a drying course used for a dryer as well.

The course is a series of drives configured of a wash cycle for removing foreign substances from clothes, a rinse cycle for separating the foreign substances from a washing detergent and a spin cycle for removing moisture from the clothes in the laundry treating apparatus. Also, the course may be an algorithm or control method that is preset to perform a start to the end of the washing. At this time, the course may also include dry cycle.

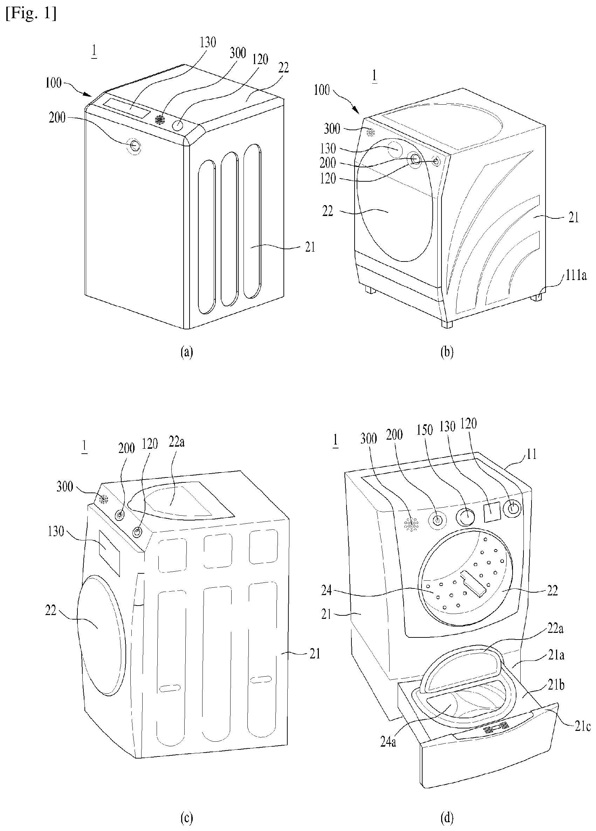

FIG. 1 illustrates various examples of the laundry treating apparatus according to the present disclosure.

The laundry treating apparatus 1 according to the present disclosure may include an opening for loading and unloading clothes (hereinafter, the laundry); a cabinet 21 that defines an exterior design; and a door 22 that is configured to open and close the opening.

Referring to FIG. 1 (a), the laundry treating apparatus 1 may be provided as a top load type including the opening 1 and the door 22 that are formed in a top of the cabinet 21.

Referring to FIG. 1 (b), the laundry treating apparatus according to the present disclosure may be provide as a front load type including the opening and the door 22 that are provide in a front of the cabinet 21.

Referring to FIG. 1 (c) or FIG. 1 (d), the laundry treating apparatus 1 may be configured of a front type and a top load type that are mounted vertically to perform washing and drying. As on example, the laundry treating apparatus 1 may include a front load type and a top load type that is mounted on the front load type (see FIG. 1(c)) or a front load type and a top load type that is mounted under the bottom of the front load type (see FIG. 1 (d)).

In case the laundry treating apparatus 1 is configured of such plural apparatuses that are multilayered, the apparatuses may share one cabinet 21 and the cabinet 21 may have a plurality of openings. Then, doors 22 and 22a may be provided to open and close the plurality of the openings.

In addition, the laundry treating apparatus may include a control panel 100 that is configured to receive, display or perform inputs of preset operation commands. Such operation commands may include predetermined courses or options that are preset to perform a wash cycle configured to remove foreign substances or dirt from laundry or a dry cycle configured to remove moisture or water elements from the laundry.

A controller 100 may be installed in the control panel 100 to control all of the elements provided in the laundry treating apparatus so as to perform the predetermined courses or options.

In the controller 110 may be stored the predetermined courses or options for providing a series of control methods configured to perform at least one of the wash cycle for removing foreign substances from the laundry or the dry cycle for drying the laundry containing moisture.

When the laundry treating apparatus 1 is a washing machine, the predetermined course may include at least one or combination of a washing step configured to remove foreign substances from the laundry; a rinsing step configured to separate the foreign substances a washing detergent from the laundry; and a spinning step for removing moisture from the laundry. When the laundry treating apparatus 1 is a dryer, the predetermined option may be provided as a plurality of drying steps for removing moisture or water elements from the laundry.

Meanwhile, the predetermined options may include a series of control methods for changing additional conditions of the course when the course is performed.

In case the laundry treating apparatus 1 is provided as a washing machine, the predetermined options may be a series of control methods that are configured to adjust one or more of the duration and the drum rotation speeds (the drum RPMs) of the washing, rinsing and spinning steps, the rate of the drum rotation time (the moving rate) for a preset time period, the opening time of a water supply valve or the water amount (level), the electricity usage, the water temperature, presence of steam supply and the duration time of each step.

When the laundry treating apparatus 1is provided as the dryer, the predetermined options may be a series of control methods that are configured to adjust one or more of the drying step frequency, the drum RPM during the drying step, the rate of the drum rotation time (the moving rate) for a preset time period, the electricity usage, presence of steam supply and the duration time of the drying step.

Meanwhile, the control panel 100 may include a display 130 configured to display a state of the laundry treating apparatus 1; a power unit 120 configured to input a power to the laundry treating apparatus; and an input unit 150 configured to receive an input of a command for driving the laundry treating apparatus.

Meanwhile, the display 130 and the input part 150 are independently provided in the control panel 100. The display 130 may be provided as a display liquid crystal and the input part 150 may be provided as an additional button (see FIG. 1 (a), FIG. 1 (b) and FIG. 1 (c)). Alternatively, the control panel 100 may be provided as a touch display and the functions of the display 130 and the input part 150 may be realized on one screen (see FIG. 1 (b)).

In addition, the laundry treating apparatus 1 may further include a microphone 300 configured to recognize a user's voice; and a camera 200 configured to recognize the user's movement.

The camera 200 may be implemented to recognize the user's movement so as to implement the course or option. The microphone 300 may be implemented to recognize the user's voice to implement the course or option.

In addition, it may be recognized by using the microphone 300 and the camera 200 that a child or an infant comes into the cabinet 21 so as to notify the user or release the door locking. Accordingly, a safety accident may be prevented.

The laundry treating apparatus 100 may further include a speaker. Accordingly, the user may be notified of a state of laundry treating apparatus by a sound signal.

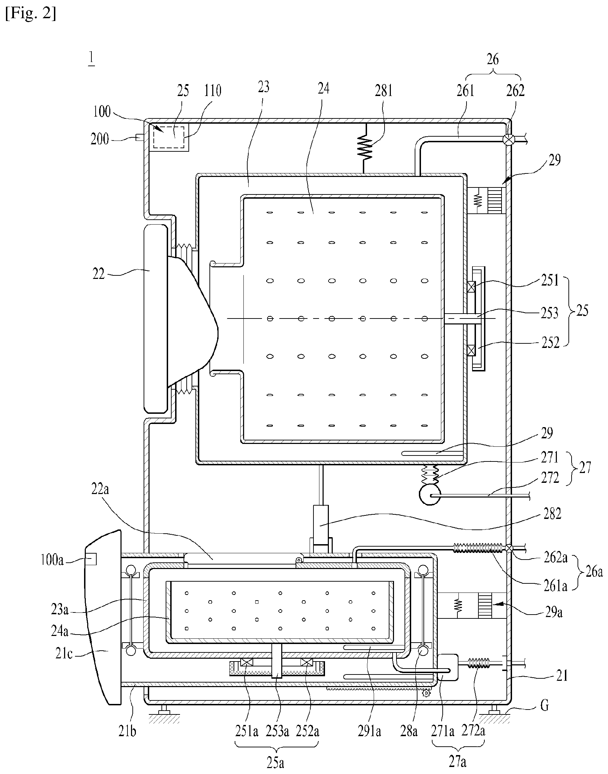

FIG. 2 illustrates an inner structure of the laundry treating apparatus according to one embodiment.

Specifically, FIG. 2 illustrates a specific structure of the laundry treating apparatus that is shown in FIG. 1 (d).

That is only for description. When the laundry treating apparatus is the front load type, the top load type or the dual type having the front load type and the top load type that are mounted in a multi-layered structure, only some elements of the basic structure shown in FIG. 2 may be used or only the installation position may be changed.

In other words, FIG. 2 illustrates the structure shown in FIG. 1 (d) as one example to avoid repeated description and any structures may be applicable only if capable of performing the functions of the laundry treating apparatus.

Referring to FIG. 2, the laundry treating apparatus 1 may include a cabinet 21 that defines an exterior design; and a laundry accommodation part provided in the cabinet to accommodate the laundry.

In case the laundry treating apparatus is provided as the washing machine, the laundry accommodation part may include a tub 23 provided in the cabinet 21 and configured to hold water; and a drum 24 rotatably mounted in the tub 23.

The laundry treating apparatus 1 may include a drive part 25 coupled to the tub 23 and configured to rotate the drum 24; a water supply part 26 configured to supply water to the tub 23; and a water discharge part 27 configured to discharge water from the tub 23.

Meanwhile, in case the laundry treating apparatus 1 is provided as the dryer, the laundry accommodation part may include only the drum 24 rotatably mounted in the cabinet 21.

Here, the laundry treating apparatus 1 may further include a hot air supply part or a heater 29 configured to supply hot air to the tub 23. In addition, it may include a door 22 provided to open and close the opening of the tub 23 and the opening of the cabinet 21.

The water supply part 26 may include a water supply valve 262 and a water supply pipe 261. The water discharge part may include a water discharge pump 271 and a water discharge pipe 272.

The drive part 25 may include a stator 251 coupled to the tub 23 and configured to generate a rotation magnetic field; a rotor 252 that is rotatable by the rotation magnetic field; and a shaft 253 that is rotatable together with the rotor 252 so rotate the drum 24.

The tub 23 may be supported to the cabinet 21 by a support portion 28 and vibration of the tub 23 may be damped by the support portion 28. The support portion 28 may include a damper 282 and a spring 281 that are configured to connect the cabinet 21 and the tub to damp the vibration.

Meanwhile, in case it is provided as the combined dual type, the laundry treating apparatus 1 may include a second tub 23a provided under or above the tub 23 and configured to hold water; a second drum 24a rotatably mounted in the second tub 23a; a second drive part 25a coupled to the second tub and configured to rotate the second drum 24a; a second water supply part 26a configured to supply water to the second tub 23a; and a second water discharge part 27a configured to discharge water from the second tub 23a.

When it is provided under the tub 23 as the top load type, the second the second tub 23a may be mounted in a drawer 21b that may freely enter and exit with respect to the cabinet 21.

The second water supply part 26a may include a second water supply valve 262a and a second water supply pipe 261a. The second water discharge part 27a may include a second water discharge pump 271a and a second water discharge pipe 272a.

The second drive part 25a may include a second stator 251a coupled to the second tub 23a and configured to generate a rotation magnetic field; a second rotor 252a that is rotatable by the rotation magnetic field; and a second shaft 253a that is rotatable together with the second rotor 252a to rotate the second drum 24a.

The second tub 23a may be supported to the cabinet 21 by a second support portion 28a and vibration of the tub 23 may be damped by the second support portion 28.

The controller 110 of the control panel 100 may be configured to control the second water supply unit 26a, the second water discharge part 27a and the second drive part 25a.

Specifically, the controller 110 may be configured to integrally control the laundry treating apparatus including the tub 23 and another laundry treating apparatus that is mounted on or under the tub 23 as the integrated controller.

As one example, the drive unit 25, 25a, the water supply unit 26, 26a, the water discharge unit 27, 27a and the hot air supply unit 29 may be configured to repeat drive and pause based on at least one of the courses and options that are preset in the control panel 100 or the controller 110 of the laundry treating apparatus.

As one example, the water supply valve 261, 261a may be opening based on the input course or option and the water discharge pup 261, 261a may be operated by rotating the drive unit 25, 25a. however, the control panel 100 may further include an auxiliary panel 100a additionally provided in the drawer 21b and configured to control the second water supply part 26a, the second water discharge part 27a and the second drive unit 25a respectively.

The auxiliary panel 100a may further include an additional controller independently provided from the controller 100 to independently control another laundry treating apparatus provided on or under the tub 23.

Meanwhile, the laundry treating apparatus 1 may further include a communication module 60 that is communicable with at least one of a server 10 or an external terminal 40 which will be described later.

When the laundry treating apparatus is provided as the combined type, the control panel 100 may be divided into a control panel configured to control the top laundry treating apparatus and a second control panel configured to control the bottom laundry treating apparatus. Alternatively, one control panel 100 may be provided to control the overall operation of the combined type laundry treating apparatus.

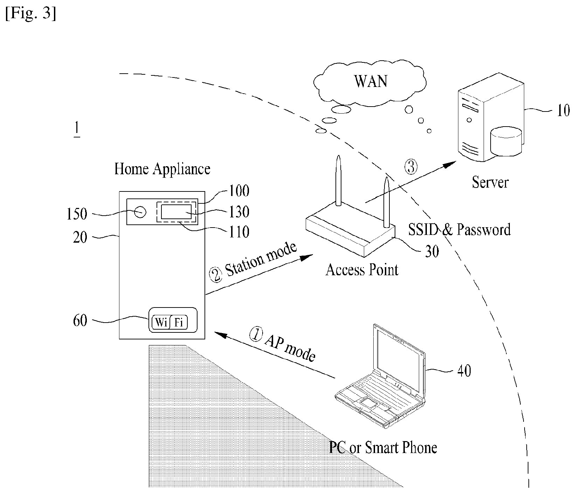

FIG. 3 illustrates an online system that is configured to control the laundry treating apparatus 1.

As shown in the drawing, a wireless internet communication module is applied to the laundry treating apparatus 1 to allow communication with a server 10 on an internet network via AP 30 (Access Point).

The laundry treating apparatus 1 may communicate with the server 10 to be remotely controlled by the external terminal 40 or update data. For that, the laundry treating apparatus 1 has to communicate with AP in the home first. Accordingly, the laundry treating apparatus 1 may further include a communication module 60 that is configured to directly communicate AP. As one example, the communication module may be a Wi-Fi module.

For the communication connecting of the laundry treating apparatus, the communication module 60 may be configured to support an enable mode that is communicable with a setting mode for the communication connecting.

The setting mode may be a mode for allow communication with AP. Accordingly, it may be referred to as AP mode. In addition, the enable mode may be a state where the laundry treating apparatus can communicate with the server via AP, in other words, a state where data can be transceived to perform the remote control server at any time. Specifically, it may be a standby state for the remote control service. Accordingly, the enable mode may be referred to as a connection mode or a standby mode.

In other words, an initial setting mode has to be performed to communication-connect the communication module 60. Once the communication is connected in the setting mode, the current mode may be always converted into the enable mode.

Input means for implementing the setting mode may be provided in the communication module 60. However, the communication module 60 may be embedded in the laundry treating apparatus 1 in many cases or mounted in the laundry treating apparatus as simple type. Accordingly, the input means may be the input part 150 of the laundry treating apparatus 1.

When communication-connected with the server 10 via AP 30, the communication module 60 may maintain a power-on state to consistently communicate with the server 10.

Meanwhile, considering a communication path from the laundry treating apparatus 1 to the server 10, a public internet network follows AP and AP follows a private internet network. The laundry treating apparatus 1 is granted a private IP and AP 30 may have a unique IP.

The server 10 may have IP and such IP may be a unique one. Accordingly, the unique IP of the server may be stored in the communication module 60 of the laundry treating apparatus (e.g., the Wi-Fi module) in advance. The communication module 60 of the laundry treating apparatus may be connected by the server IP through the activation process using the external terminal and mutual communication may be enabled.

In that process, AP 30 may transmit information about a port connected with the corresponding laundry treating apparatus and the unique IP. The server 10 may figure out the location of the laundry treating apparatus based on the information. Meanwhile, when the laundry treating apparatus 1 also transmits the unique device IP to the server, the server may figure out which and where laundry treating apparatus is located and have access to the laundry treating apparatus based on the information. In this instance, when a user ID and passwords are input, such information may be also transmitted to the server 10.

Accordingly, the server 10 may match a specific user' specific laundry treating apparatus 1 with the location. When the user sends a request for a specific service to the server via the external terminal 40, the server 10 may specify one laundry treating apparatus 1 and perform the service.

Meanwhile, the server 10 may connect the communication with the external terminal 40 by the unique IP and network. A remote communication module for connecting the communication with the server and an application (APP) may be selectively installed in the external terminal 40.

The external terminal 40 may be connected to the server 10 via the application by the remote communication module and control the laundry treating apparatus 1 remotely. The user may receive state information of the laundry treating apparatus 1 from the server 10 through the display panel provided as the touch panel and transmit an operation command of the laundry treating apparatus 1 to the server 10.

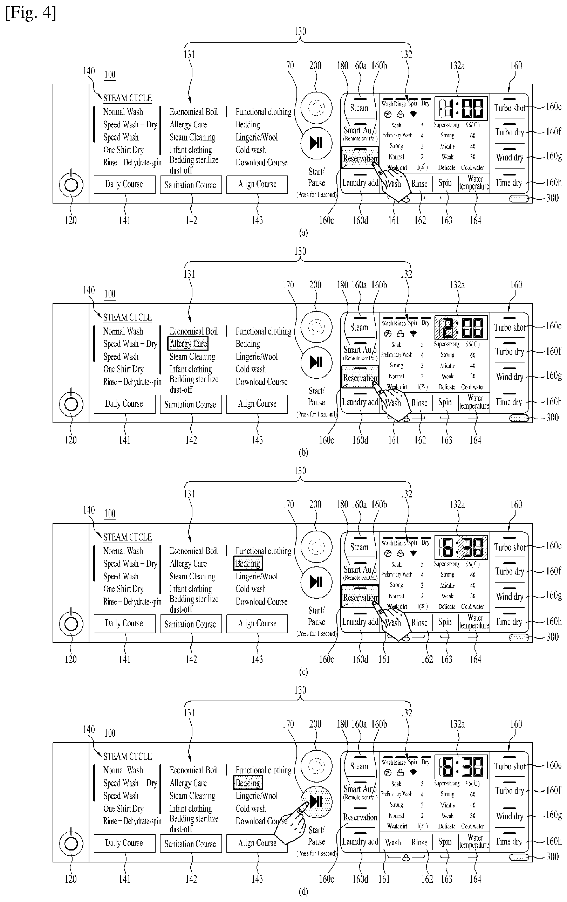

FIG. 4 illustrates one example of the control panel 100 that is provided in the laundry treating apparatus 1.

Referring to FIG. 4 (a), only the display 130 may be a display panel and the input part 150 may be a physical button that pressed additionally.

The input part 150 may include a course input unit configured to receive an input for selecting one of the predetermined courses for performing a series of washing processes that are configured to include the wash cycle, the rinse cycle and the spin cycle; and an option select unit 160 configured to receive an input for selecting one of the predetermined options that are configured to adjust the strength and degree of the course.

As one example, when the laundry treating apparatus 1 is provided as the washing machine, the courses may include a first course that is configured of a normal washing method or combination of the washing methods for removing foreign substances from the laundry; a second course that is configured of a washing method or combination of the washing methods for sterilizing the laundry; and a third course that is configured of a washing method or combination of the washing methods for removing foreign substances in consideration of laundry fabric.

The options may include a first option configured to adjust a washing degree in the selected course; a second option configured to adjust the frequency of the rinsing; a third option configured to adjust a spinning degree; and a fourth option configured to determine the temperature of the water inside the tub holding the laundry and water. The adjusting of the washing strength and the spinning strength may mean the adjusting of the drum RPM and the period of the drum rotation direction variation in the wash cycle and the spin cycle.

The first course may be a normal course for washing clothes and referred to as 'Daily course'. The second course may be classified as a course that is strong in sterilizing and referred to as 'Sanitation course'. The third course may be a course that considers the laundry fabric and amount and referred to as 'Customized course'.

When the course select unit 140 is repeated selected, the courses sequentially set or displayed may be displayed and selected.

The course select unit 140 may include a first course configured to select one of the first courses; a second course select unit 142 configured to select one of the second courses; and a third course select unit 143 configured to select one of the third courses.

The option select unit 160 may be configured to select the courses that are sequentially set or displayed after being repeatedly input like the course select unit 140. In addition, the option select unit 160 may include a first option select unit 161 configured to adjust the washing strength in the selected course; a second option select unit 162 configured to adjust the ringing frequency; a third option select unit 163 configured to adjust the spinning strength; and a fourth option select unit 164 configured to determine the water temperature inside the tub holding water and laundry. The option select unit 160 may be provided to sequentially input the option select units and select a desired one.

The display 130 may be a display liquid crystal, a light that reflect light or a speaker that emits sound. The display 130 may include a first display unit 131 configured to display the course selected in the course input part; and a second display unit 132 configured to display the option selected in the option select part 160.

The first display unit 131 may be configured to display the selected course. As one example, an area corresponding to the selected course may flicker or the title of the course may be displayed on the display.

The second display unit 132 may be configured to display the selected option. As one example, an area corresponding to the selected option may flicker or the title of the option may be displayed on the display.

Specifically, the first display unit 131 may flicker a corresponding course when the course input part 140 is selected. It may display the corresponding course on the liquid crystal display or emit a sound, when the course input unit is selected. The first display unit 131 may be a display panel or a lamp configured to be luminescent near the content of the course.

Once the user clicks the daily course 141, the normal course may flick sequentially to notify the user of the corresponding course.

In addition, once the user clicks the satiation course, the corresponding course to the satiation course may sequentially flicker. Then, when the user clicks the customized course, the corresponding course to the customized course may sequentially flicker.

The second display unit 132 may be configured to flicker a corresponding option when the option selection part 160 is input. Or, it may be configured to display the corresponding option on the liquid crystal display or emit a predetermined sound when the option select part 160 is input. The second display unit 132 may be configured of a display panel or a lamp provided near the characters reading the option content.

The option select part 160 may sequentially flicker the first, second, third and fourth options by repeated clicking or touching. Accordingly, the user may select a desired option.

Meanwhile, the option select part 160 may further include a switch or a touch area that is configured to perform an additional function of the laundry treating apparatus 1 rather than the washing, the rinsing, the dehydrate-spinning and the water temperature.

The option select part 160 may further include a steam adjusting unit 160a configured to supply additional steam to the inside of the laundry treating apparatus 10; a reservation unit 160b configured to determine an operation time of the laundry treating apparatus; an auxiliary setting unit 160d configured to be clicked to add laundry during the operation of the laundry treating apparatus; a turbo unit 160e configured to add an option for forming strong water currents by accelerating the drum RPM; a turbo drying unit 160f configured to add an option for supplying strong hot air; a wind-drying unit 160g configured to add an option for supplying not the hot air but warm or cold air; and a time drying unit 160h configured to add an option for performing natural drying by rotating only the drum at a preset RPM.

The second display unit 132 may display specific details of the options selected for the course when the course or option is determined. In the other cases except inputting the course or option when the dry cycle or the wash cycle is performed or the reservation setting is performed or when the dry cycle or the wash cycle ends, the second display unit 132 may be configured of the display which may display information about a state of the laundry treating apparatus 1.

The above-noted structure is one of the examples. The control panel 100 may be configured of any display types only if including the input part 150 configured to receive the input of the command for driving the laundry treating apparatus 1 and the display part 130 configured to display a state of the laundry treating apparatus.

Hereinafter, one embodiment will be described that the user may operate the laundry treating apparatus via the control panel 100.

The user may open the door 22 and load the laundry into the drum 24. After that, the user inputs the power part 120 to supply power to the control panel of the laundry treating apparatus. Once a reservation requesting unit 160c is activated by the power supplied to the control panel 100, the user may input the reservation requesting unit 160c.

Once the reservation requesting unit 160c is input, a time area 132a configured to display the time on the display unit 132 may be activated. The time may be the time when the predetermined courses or options configured to perform the wash cycle or the dry cycle may start or end.

The laundry treating apparatus may set a start point or an end point of at least one of predetermined courses or options configured to perform the wash cycle or the dry cycle. The operation start or end point may be a random point of the time after the reservation requesting unit 160c.

Meanwhile, the input part 160 may further include not additional input units for setting the time at once. If an additional input unit is provided in the control panel 100 to set the time, the overall area of the control panel 100 might become small enough to cause inconvenience. In addition, the course input unit and the option input unit are already provided in the control panel. So, if an additional input unit is provided, the exterior design might deteriorate or the user might feel uncomfortable in learning how to manipulate too many buttons inconveniently.

Accordingly, referring to FIG. 4 (b), the user may continuously input the reservation requesting unit 160c and raise or increase an hour area gradually. As one example, 01: 00 is changed into 02: 00 on the time area 132a by one input. Accordingly, the user may set the hour area as a desired time by continuous input of the reservation requesting unit 160c. If wanting to make reservation at 6: 30, the user may press an input of the reservation requesting unit 160c five times to set 6:00.

Referring to FIG. 4 (c), the user may set the minutes by pressing the reservation unit 160c for a longer time period or inputting repeatedly. As one example, if wanting to make reservation at 6: 30, the user may press the reservation requesting unit 160c for a long time period and the minute area may then flicker. At that time, the user may input the reservation requesting unit 160c three times to set the minute area to be 30 minutes.

Referring to FIG. 4 (d), when setting the desired time, the user may input an auxiliary button to transmit a command that the reservation time is complete to the controller 110. As one example, the user may input the manipulation part 170 to transmit the reservation time setting command to the controller 110.

Alternatively, as different from the drawings, the control panel 100 may be configured to allow the user to input a first option select unit 161 so as to set the hour area of the reservation time and input a second option select unit 162 so as to set the minute area of the reservation time.

Meanwhile, the reservation time may be provided in the control panel 100 to be set in various methods. However, the user might feel inconvenient in inputting the input part 160 several times so as to set the reservation time.

In addition, even when the reservation time is set my means of the external terminal 40 linked to laundry treating apparatus , the user has to touch the display several times to input the hour and minute inconveniently.

Even when the time when the user usually makes reservation is regularly fixed based on the user's life pattern, the user has to set the reservation time every time.

Accordingly, the laundry treating apparatus and the online system may be configured to recommend a reservation time to the user as soon as the user tries to set the reservation time. Accordingly, the present disclosure may solve the inconvenience that the user has to input the reservation time every time or the button several times so as to input the reservation time.

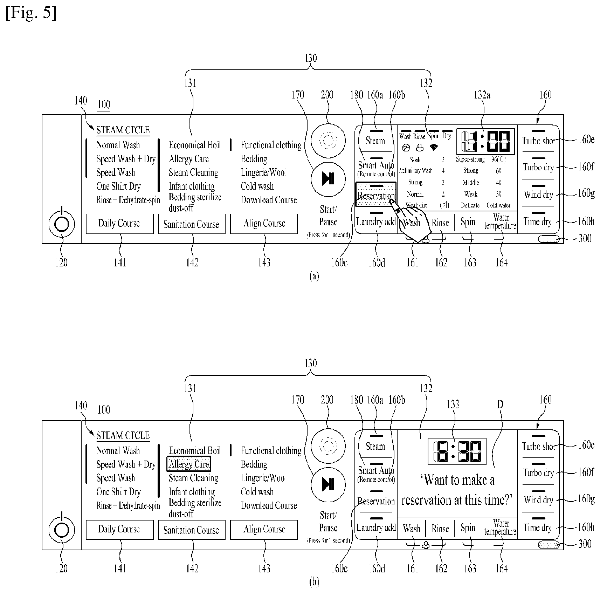

FIG. 5 illustrates one embodiment of the laundry treating apparatus to recommend the reservation time.

Referring to FIG. 5 (a), the user may input the reservation requesting unit 160c to the control panel 100 to set the reservation time. The input of the reservation unit 160c means that the user's willing to set the reservation time is transmitted to the controller 110.

Referring to FIG. 5 (b), when the controller 110 senses the input of the reservation requesting unit 160c, the controller 110 may determine a start point of an end point of the wash cycle or dry cycle. Hence, the controller 110 may control the display 130 to display a specific time on the time area 132a to the user. The specific time may be a start or end point of the wash cycle or dry cycle that is determined by the controller 110.

The controller 110 may recognize or expect the reservation time the user wants to set and recommend the specific time. For that, the controller 110 may figure out the user's reservation time setting pattern based on the history of the user's former reservation time settings. Accordingly, the controller 110 may estimate the reservation time which the user will set and enhance the accuracy of the expected time. As one example, the controller may calculate and confirm the user's pattern by deep learning of the history of the reservation time settings.

As a result, the controller 110 may be configured to display the start point or the end point on the display 130 immediately once sensing the input of the reservation requesting unit 160c. Accordingly, it may be prevented that the user has to input the input part 30 so as to set the reservation time inconveniently.

The controller 110 may determine and store the start or end point in advance. After that, the controller 110 may display the predetermined time on the display 130 when the reservation requesting unit 160c is input. Alternatively, when the input of the reservation requesting unit 130c is sensed, the start or end point may be determined and displayed on the display 130.

Specifically, the time 133 expected to be reserved by the user may be displayed on the second display unit 132. In addition, requesting words for asking whether to make a reservation for the time 133 may be displayed as well. The time 133 may be displayed larger and prominently on the display 130. Accordingly, the user may intuitively recognize that the time displayed on the display 130 is the recommended reservation time.

A one example, one the second display unit 132 may be displayed the time of "6:30" that is recommended to the user and the words of "Want to set the reservation time for this time?" After that, the controller 110 may sense the input of the manipulation part 170 and receive the user's intention to agree with the recommended reservation time setting.

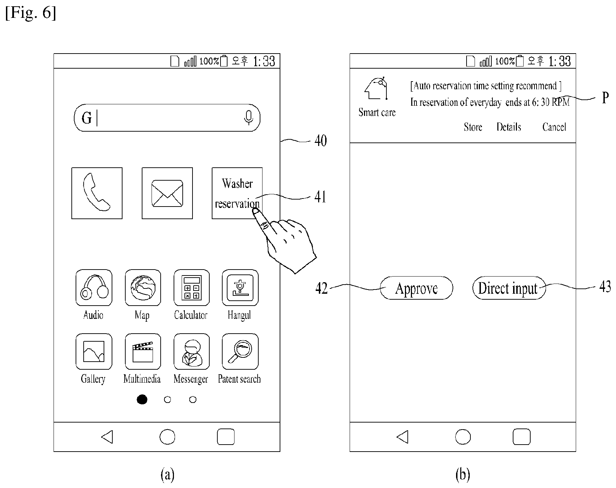

FIG. 6 illustrates one embodiment that the reservation time is recommended on the external terminal 40 that is configured to control the laundry treating apparatus remotely.

The online system according to the present disclosure may recommend the reservation time to the user on the externa terminal 40. Referring to FIG. 6 (a), the user may implement an application 41 for setting the reservation time of the laundry treating apparatus on the externa terminal.

Referring to FIG. 6 (b), the external terminal 40 may display a time that will be recommended to the user by its own microcomputer, the server 10 or the controller of the laundry treating apparatus as a popup p. as one example, the external terminal may display the time of 6:30 on the external terminal as the popup window. Also, a preset phrase such as "Set this time as the reservation time?"

Moreover, on the external terminal 40 may be displayed an approve button 42 for approving the recommended reservation time and an inputting button 43 for the user directly inputting the reservation time together. Accordingly, the disadvantage that the user has to set the reservation time after it is recommended to the user may be solved and the user may be provided with autonomy to deny and directly set the recommended reservation time. The external terminal 40 may figure out a pattern based on the user's former reservation setting history and recommend the reservation time that is expected to be set at the present time based on the pattern.

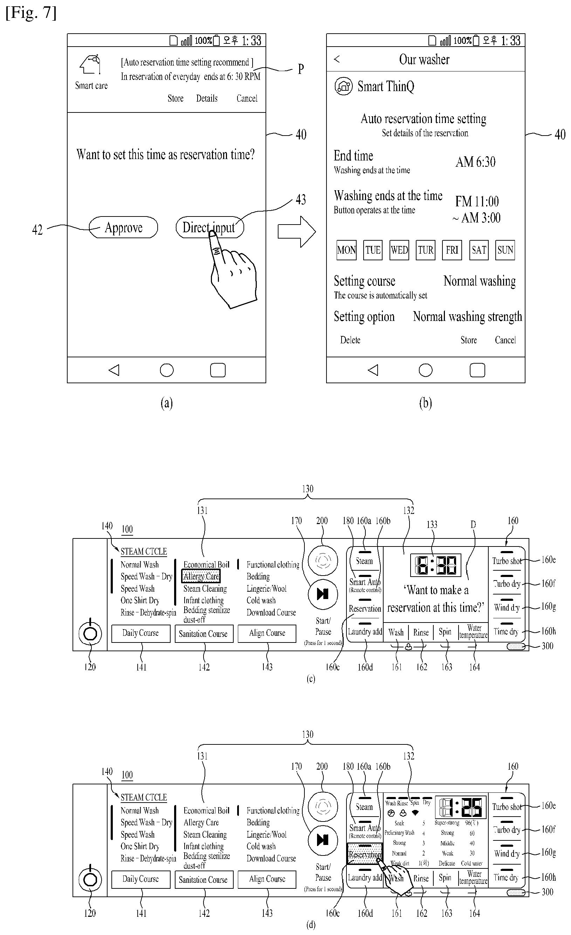

FIG. 7 illustrates one embodiment that the user may ignore the reservation time recommended by the external terminal and set a new reservation time.

Referring to FIG. 7 (a), the display panel of the external terminal 40 may further display an inputting button 43 for the user directly inputting the reservation time, rather than the approving button 42 for approving the recommended reservation time.

Referring to FIG. 7 (b), when the button 43 is input, a current screen is changed into a menu for setting the reservation time to allow the user to set the reservation time directly.

Alternatively, the display 130 may display a recommended time as shown in FIG. 7(c). However, the controller 110 may sense the additional input of the reservation requesting unit 160c and receive the user's intension to deny the recommended reservation time as well.

Accordingly, the user may set the reservation time that is not limited in the recommended time but the desired reservation time. Accordingly, the user's autonomy may be guaranteed and even an error may be corrected.

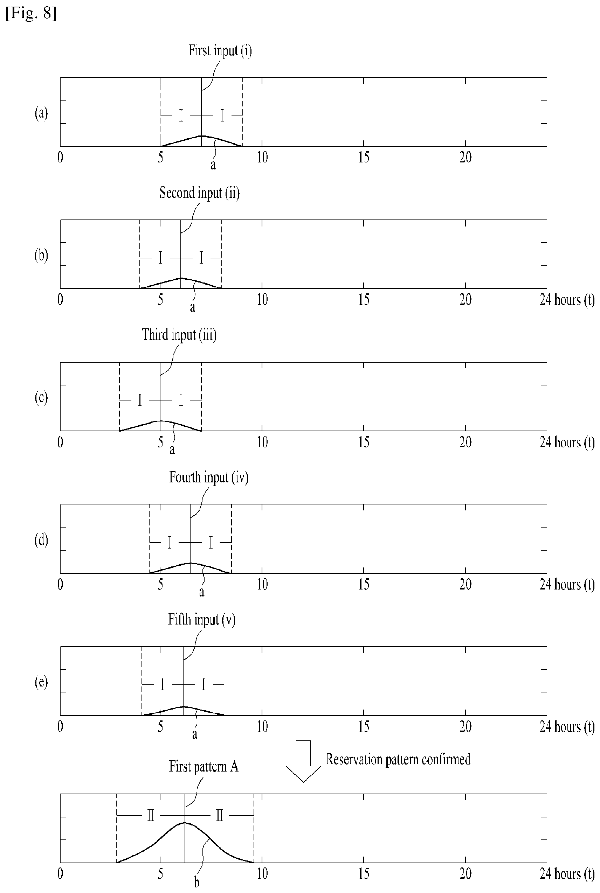

FIG. 8 illustrates one embodiment of a method that the laundry treating apparatus and the online system including the same confirm the reservation time.

Referring to FIG. 8 (a), the user may make a first input of a specific time i to set the reservation time. The controller may store not only the first-input (i) time but also a range of +I and -I times with respect to the first-input (i) time.

The I time may be the time period that is needed in confirming a next pattern based on the first-input (i) time. In other words, when an additional reservation time is set in the range from +I to -I with respect to the first-input time (i), it may be expected that the I time range with respect to the first-input time is the reservation time pattern.

The I time may be set based on a probability distribution function a. The reason why the probability distribution function is applied is that a weight may be added in confirming the first-input (i) time as the pattern, as the next additional inputs are getting closer to the first-input (i) time. In other words, a weight may be added to the additional inputs that are closer to the first-input (i) time, when the pattern is calculated.

As one example, the probability distribution function (a) may be as follows:

$$\text{Gaussian Distribution}: \quad f(x) = \frac{1}{\sqrt{2\pi}\sigma} \, e^{\frac{-(x-\mu)^2}{2\sigma^2}}$$

$\mu$: Cycle
$\sigma$: Random value (e.g., 1)
'1' may be a value that can be ignored in calculating the probability, when a value of a function value f(x) is close to zero. Examples of I may be 30 minutes.

However, that is one of examples and other functions may be applied only if they can increase accuracy.

Referring to FIG. 8 (b), the user may set the reservation time to be the second-input (ii) time.

The controller 110 may store not only the second-input (ii) time but also a range of +I and -I times with respect to the second-input (ii) time.

Meanwhile, the controller 110 may not use the second-input (ii) time as the value for confirming the pattern, if the second-input (ii) time is over I hour with respect to the first-input time (i).

When the second-input (ii) time is over I hour with respect to the first-input (i) time, the first input and the second input have nothing to do with the user's pattern.

When the second-input (ii) time is within I hour from the first-input (i) time, the second-input (ii) time may be used as an input value for confirming the user's pattern. That is because the first-input (i) and the second-input (ii) are fitted to the user's reservation time setting pattern based on a probability.

The controller 110 may confirm the user's pattern only based on the first-input (i) and the second-input (ii).

However, the accuracy of the user's pattern expected only based on the first-input (i) and the second input (ii) is likely to deteriorate. Accordingly, the confirming of the pattern may be postponed until an additional input is made.

Referring to FIG. 8 (c), the user may input the reservation time based on third-input (iii). The controller 110 may store not only the third-input (iii) time but also a range of +I and -I times with respect to the third-input (iii) time.

Meanwhile, the controller 110 may not use the third-input (iii) time as the value for confirming the pattern, if the third-input (iii) time is I hour over the first-input time (i) or the second-input time (ii).

When the second-input (ii) time is over I hour with respect to the first-input (i) time or the second-input time (ii), the third-input (iii) is likely to occur in a unusual situation, compared with the first input (i) and the second input (ii).

In contrast, when the first-input (iii) time is I hour within a range of the first-input (i) or the second-input (ii) time, the third-input (iii) time is likely to occur in a usual situation, compared with the user's life pattern. In other words, it can be said that the third-input (iii) time is fitted to the user's reservation time setting pattern such that the third-input (iii) time may be used as an input value for confirming the pattern.

Referring to FIG. 8 (d) and (e), the user may sequentially input the fourth-input (iv) time and the fifth-input (v) and set the reservation time.

The controller 110 may use the input values in confirming the pattern, when the fourth-input (iv) or the fifth-input (v) are within I hour with respect to at least one of the former input times or an average time of the input times. Otherwise, the controller 110 may not use it in confirming the pattern.

Referring to FIG.8 (f), the user may calculate and confirm/expect the pattern used in confirming the pattern, when the laundry treating apparatus and the online system sense that sufficient input values for confirming the pattern.

Accordingly, the laundry treating apparatus the laundry treating apparatus and the online system senses that the start point or end point set as the reservation via the input part 130 is set at a specific frequency in a specific time range, the user may typically calculate and confirm the pattern for setting the reservation time.

As one example, the controller 110 may create a new probability distribution function b by calculating a new standard deviation based on the stored former inputs and the probability distribution functions a of the inputs. It also may confirm a range of +II and -II times, which is a range of the new probability distribution function b, as the user's pattern area.

At this time, a peak value of the new probability distribution function b may be determined as a first pattern A that will be recommended to the user and the peak value may be the time that is displayed on the display 130 as it is. The controller 130 may determine the highest probability time within the +II and -II time range from the first pattern A based on the calculated function value as the time that will be recommended.

Meanwhile, different form the control method to which the above-noted probability distribution function is applied, the laundry treating apparatus and the online system may confirm the user's pattern, when sensing that an input value with a specific frequency or more in each of the +I time and -I time. Hence, when the pattern is confirmed, the user may be recommended a predetermined time within the +II time and -II time with respect to the reference time of the pattern as the reservation time.

In any cases, +II and -II may be understood as an error range which the user may allow based on the reservation setting history.

Meanwhile, different from the above-noted embodiment, the server 10 may store and process the inputs of the laundry treating apparatus, and then determine the first pattern A by calculating the first pattern A.

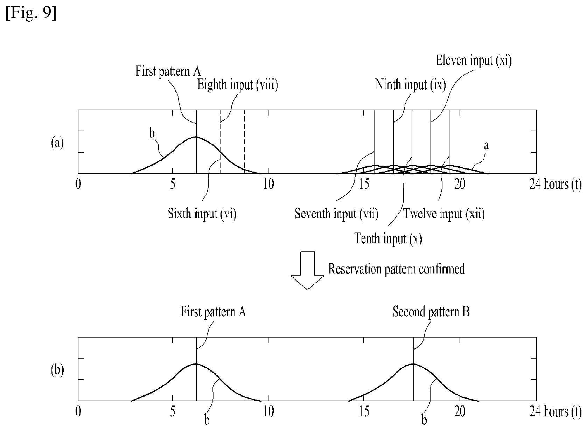

FIG. 9 illustrates one embodiment that the laundry treating apparatus and the online system adds a user's new pattern.

Referring to FIG. 9 (a), the user may input a several number of reservation settings at a specific time range and the first pattern A may be stored in the controller 110 or the server 10.

However, there may be users having different life patters from normal users or normal users may have a habit of using the laundry treating apparatus 1 in a different time range. If the laundry treating apparatus 1 recommends only a specific time under the situation, the user might feel uncomfortable.

Accordingly, the laundry treating apparatus and the online system may determine whether to confirm an additional pattern or whether to change the confirmed first pattern A.

As shown in FIG. 9 (a), the sixth-input (vi) is input and it is within the first pattern A area such that the controller 110 may not additionally confirm the six-input (vi) time as the pattern nor use it as an input value for changing the pattern. That is because the sixth-input (vi) is already in the first pattern A and helpless in confirming the additional pattern or changing the existing pattern such that no unnecessary calculation may be repeated.

However, when the seventh-input (vii) time is input as the reservation time, the controller may store not only the seventh-input (vii) time but also a range of +I and -I times with respect to the seventh-input (vii) time.

The I time may be the time needed to confirm the next pattern with respect to the seventh-input (vii) time. when the additional reservation time is set within the +I and -I time range with respect to the seventh-input time, the I time range with respect to the seventh-input (vii) time may be expected to be the user's additional pattern.

In other words, when a reservation time setting input over the existing first pattern A range is sensed, the controller 110 may store the input time and the time range like the method of forming the existing pattern A.

Accordingly, an eighth-input (viii) is within the first pattern A and the controller 110 may not use the eighth-input in forming an additional pattern. However, the controller 110 may store times from a ninth-input (ix) to a twelfth-input (xii) and a time range.

Referring to FIG. 9 (b), the controller may confirm a second pattern B as additional reservation pattern like the method of forming the first pattern A, once collecting input values within a specific time range at a specific frequency.

When the reservation requesting unit 160c is input or an application is driven in the external terminal 40, the controller 110 or the server 10 may recommend the respective reservation times based on the first pattern A and the second pattern B via the display 130 or the display panel. Accordingly, the user may select a desired reservation time that matches his or her intention out of the recommended reservation times.

When a reservation time at a specific frequency or more is set in a different time range rather than the first pattern A and the second pattern B, the laundry treating apparatus 1 may confirm an additional pattern. In addition, unless the reservation time at a specific frequency or more is set in the existing pattern, the reservation time may be deleted not to be recommended to the user any more in the next reservation time setting.

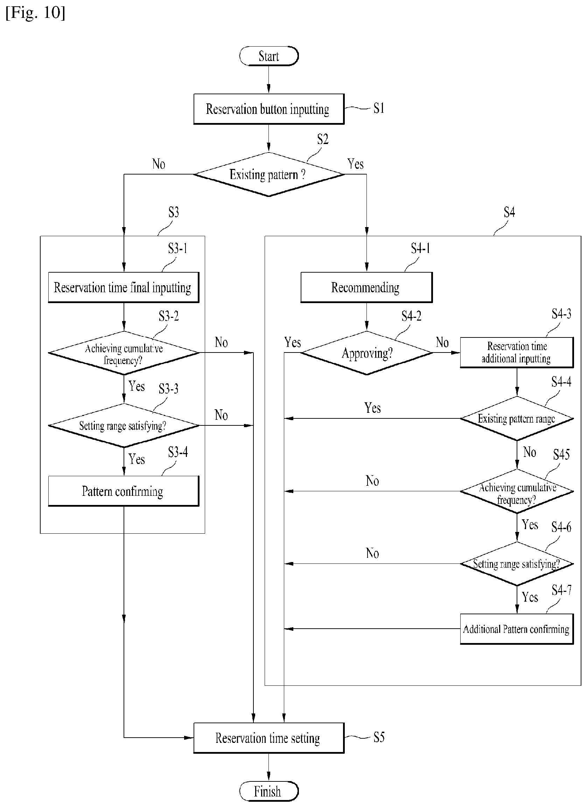

FIG. 10 illustrating one embodiment of a control method that the laundry treating apparatus 1 and the online system recommends a reservation time to the user.

First of all, the laundry treating apparatus 1 or the external terminal 40 may perform a reservation button inputting step s1 for receiving an input of a command configured to set a reservation time. The reservation button inputting step s1 may be a step for receiving a command of implementing a reservation requesting program from an application of the external terminal 40.

The controller 110 or the server may perform a pattern presence identifying step s2 for sensing presence of a pattern confirmed by the user, when the controller 110 or the server 10 senses an input of a command for setting the reservation time. The pattern presence identifying step s2 may be a step for checking presence of a pattern, that is formed based on the user's reservation setting history, in a memory device linked to the controller 110 or the server 10.

The controller 110 or the server 10 may perform a pattern confirming step s3 for confirming the pattern of the reservation time if there is no existing confirmed pattern in the controller 110 or the server 10. When there is the existing confirmed pattern, the controller 110 or the server 10 may recommend a reservation time and check whether to change the pattern.

The pattern confirming step s3may include a reservation time final inputting step s3-1 for receiving an input of the user's desired reservation time setting via the input part 130 or the display panel of the externa terminal 40 directly.

One the reservation time is finally confirmed in the reservation time final inputting step s3-1, a reservation time setting step s5 may be implemented. In this process, the controller 110 or the server 10 may perform a frequency checking step s3-2 for checking whether the minimum cumulative frequencies is achieved so as to confirm the pattern based on the input of the reservation time. Unless the cumulative frequency is achieved in the frequency checking step s3-2, the reservation time setting step s5 may be performed.

In contrast, when the inputs of the reservation time achieves the cumulative frequency in the final inputting step s3-1, a setting range satisfying step s3-3 for checking whether the time is within the existing inputs setting range may be performed. At this time, the input of the reservation time is over a preset range in the final inputting step s3-1, the input has nothing to do with the user's habit or life pattern and the reservation time setting step s5 may be performed. however, when the inputs of the reservation time is within the time setting range in the final inputting step s3-1, the pattern confirming step s3-4 for confirming the user's reservation time setting pattern may be performed.

Meanwhile, when the user's reservation setting pattern is checked in the pattern confirming step s3-4, the reservation time recommending step may be performed. The reservation time recommending step s4 may perform a display recommending step s4-1 for displaying the reservation time on the external terminal 40 based on the confirmed pattern.

Hence, the approving step s4-2 for asking the user whether to set the recommended time on the external terminal 40 as the reservation time may be performed. The approving step s4-2 may sense the input of the manipulation part 170 and it may be corresponding to the input of the approve button on the external terminal 40.

Meanwhile, when the input of the manipulation part 170 or the input of the approve button is sensed in the reservation time setting step s5, the reservation time setting step s5 may be performed.

However, when the reservation requesting unit 160c is additionally input or an input of a re-input button is sensed in the approving step s4-2 to input a new reservation time setting, an existing pattern corresponding determination step s4-4 for determining whether the input is in a different range from the pattern A may be performed. When the input is corresponding to the existing pattern, only the performance of the reservation time setting step s5 may be sufficient.

However, unless the input is corresponding to the existing pattern, it means that the input is different from the existing pattern A and it may be then necessary to check whether a new pattern B will be created or the existing pattern A will be deleted. Accordingly, the controller 110 or the server 10 may perform a determining step s4-5 for determining whether the reservation time input out of the existing pattern A achieves a cumulative frequency that is needed to confirm the reservation.

Unless the input achieves the cumulative frequency needed to confirm the pattern in the determining step S4-5, the reservation time setting step S5 may be performed while the input and the time range (+I and -I) are stored. However, if the input achieves the cumulative frequency, a range satisfying step S4-6 for determining whether the input is in the setting range based on the result of comparison between the input with the existing inputs.

If this input is out of the range for confirming the new pattern that will be set in the range satisfying step S4-6, this input may be a random one which will not be used in the pattern confirming and the reservation setting step S5 may be performed. However, if the input satisfies even the setting range, a pattern addition confirming step S4-7 for additionally confirming a new pattern B may be performed. Accordingly, the reservation time setting step S5 may be performed based on the new input time. When the reservation button inputting step S1 is performed, a reservation time based on the two patterns A and B may be recommended in the recommending step S4-1.

When the server 10 performs such the series of the processes, the communication module 60 may transmit diverse information to the server 10 and the information may be induced to be used as the input value for allowing the server 10 to confirm the pattern.

In other words, the controller 110 may transceive the start or end point of the wash cycle or dry cycle to the server or the external terminal via the communication module and used in confirming the user's reservation setting pattern, once the operation start or end point is set or the wash cycle or dry cycle is completed at the time at which the operation start or end point is set.

Accordingly, once the pattern confirming step S3 or the reservation recommending step S4 is performed by the controller 110 or the server 10, the start or end point of the dry or wash cycle may be confirmed and the reservation time setting step S5 for finally reserving the random course or option may be performed.

**Claims**

1. A laundry treating apparatus configured to recommend one or more of a start point and end point of one or more of a wash cycle for removing foreign substances from laundry and a dry cycle for removing moisture from the laundry, the laundry treating apparatus comprising:

an input part (150) configured to receive an input for setting one or more of the start point and end point of the wash cycle or dry cycle, wherein the input part (150) comprises a reservation requesting unit (160c) to receive an input from a user to set a reservation time;
a controller (110) configured to determine one or more of the start point and end point of the wash cycle or dry cycle by figuring out a pattern on former start and end points, when the input of the input part (150) is sensed; and
a display (130) configured to display one or more of the start point and end point of the wash cycle or dry cycle determined by the controller (110);
wherein, in determining one or more of the start point and end point of the wash cycle or dry cycle by figuring out the pattern based on former start and end points, the controller is configured to:

- confirm the pattern when sensing that the former start and end points are set at a specific frequency or more in the specific time range, and
- wherein the controller (110) is configured to recognize or expect the reservation time the user wants to set and recommend a specific time, by figuring out the user's reservation time setting pattern based on a history of the user's former reservation time settings, and accordingly estimate the reservation time which the user will set.

2. The laundry treating apparatus of claim 1, wherein the controller (110) determines one or more of the start point and end point simultaneously when sensing the input from the input part (150).

3. The laundry treating apparatus of claim 1, wherein the input part (150) comprises:

the requesting unit (160c) configured to receive an input for facilitating the controller determining one or more of the start point and end point,
wherein the controller (110) is configured to determine one or more of the start point and end point based on the sensing that the requesting unit (160c) received the input.

4. The laundry treating apparatus of claim 1, wherein the controller (110) is configured to determine whether an additional pattern is confirmed or the confirmed pattern is changed, after confirming the pattern.

5. The laundry treating apparatus of claim 4, wherein the controller (110) is configured to ignore the start or end point when confirming the additional pattern or changing the confirmed pattern, once the start or end point of the wash cycle or dry cycle within the specific time range is input.

6. The laundry treating apparatus of claim 4, wherein the controller (110) is configured to confirm the setting of the start or end point in a different specific time range as the additional pattern or changes to the confirmed pattern, when sensing that the start or end point is set in the different specific time range after the confirming of the pattern.

7. The laundry treating apparatus of claim 1, wherein the controller (110) is configured to determine two or more of the start or end points that are selected by the user.

8. The laundry treating apparatus of claim 1, wherein even when the start or end point of the wash cycle or dry cycle determined by the controller (110) is displayed on the display (130), the input part (150) is configured to facilitate an input of a new start or end point.

9. The laundry treating apparatus of claim 8, wherein the controller (110) is configured to use the input start or end point in figuring out the pattern, when the new start or end point is input to the input part.

10. The laundry treating apparatus of claim 1, further comprising:

a communication module configured to transmit information for facilitating the controller to determine the start or end point of the wash cycle or dry cycle by means of communication with a server or an external terminal,
wherein the controller (110) is configured to determine the start or end point based on the information transmitted from the server or the external terminal.

**11.** The laundry treating apparatus of claim 10, wherein the controller (110) is configured to transmit the start or end point of the performed operation to the server or the external terminal via the communication module, when the start or end point of the operation is set or the wash cycle or dry cycle is completed at the time set as the start or end point of the operation.


**Patentansprüche**

**1.** Wäschebehandlungsvorrichtung, die konfiguriert ist, einen Startpunkt und/oder einen Endpunkt eines Waschzyklus zum Entfernen von Fremdstoffen aus der Wäsche und/oder eines Trocknungszyklus zum Entfernen von Feuchtigkeit aus der Wäsche zu empfehlen, wobei die Wäschebehandlungsvorrichtung Folgendes umfasst:

ein Eingabeteil (150), das konfiguriert ist, eine Eingabe zum Einstellen des Startpunkts und/oder des Endpunkts des Waschzyklus oder des Trocknungszyklus zu erhalten, wobei das Eingabeteil (150) eine Reservierungsanfrageeinheit (160c) umfasst, um eine Eingabe von einem Benutzer zum Einstellen einer Reservierungszeit zu erhalten;
eine Steuereinheit (110), die konfiguriert ist, den Startpunkt und/oder Endpunkt des Waschzyklus oder des Trocknungszyklus durch Herausfinden eines Musters bei früheren Start- und Endpunkten zu ermitteln, wenn die Eingabe des Eingabeteils (150) erfasst wird; und
eine Anzeige (130), die konfiguriert ist, den Startpunkt und/oder den Endpunkt des Waschzyklus oder des Trocknungszyklus, die durch die Steuereinheit (110) ermittelt wurden, anzuzeigen;
wobei die Steuereinheit beim Ermitteln des Startpunkts und/oder des Endpunkts des Waschzyklus oder des Trocknungszyklus durch Herausfinden des Musters auf der Basis früherer Start- und Endpunkte konfiguriert ist zum:

- Bestätigen des Musters, wenn erfasst wird, dass die früheren Start- und Endpunkte mit einer bestimmten Häufigkeit oder häufiger in dem bestimmten Zeitbereich eingestellt wurden, und
- wobei die Steuereinheit (110) konfiguriert ist, die Reservierungszeit, die der Benutzer einstellen will, zu erkennen oder zu erwarten, durch Herausfinden des Einstellmusters der Reservierungszeit des Benutzers auf der Basis eines Verlaufs früherer Einstellungen der Reservierungszeit des Benutzers eine bestimmte Zeit zu empfehlen und entsprechend die Reservierungszeit, die der Benutzer einstellen wird, abzuschätzen.

**2.** Wäschebehandlungsvorrichtung nach Anspruch 1, wobei die Steuereinheit (110) den Startpunkt und/oder Endpunkt gleichzeitig ermittelt, wenn die Eingabe vom Eingabeteil (150) erfasst wird.

**3.** Wäschebehandlungsvorrichtung nach Anspruch 1, wobei das Eingabeteil (150) Folgendes umfasst:

die Anfrageeinheit (160c), die konfiguriert ist, eine Eingabe zu erhalten, um zu ermöglichen, dass die Steuereinheit den Startpunkt und/oder Endpunkt ermittelt,
wobei die Steuereinheit (110) konfiguriert ist, den Startpunkt und/oder Endpunkt basierend darauf zu ermitteln, dass erfasst wird, dass die Anfrageeinheit (160c) die Eingabe erhalten hat.

**4.** Wäschebehandlungsvorrichtung nach Anspruch 1, wobei die Steuereinheit (110) konfiguriert ist, zu ermitteln, ob nach der Bestätigung des Musters ein zusätzliches Muster bestätigt wird oder das bestätigte Muster geändert wird.

**5.** Wäschebehandlungsvorrichtung nach Anspruch 4, wobei die Steuereinheit (110) konfiguriert ist, den Start- oder Endpunkt zu ignorieren, wenn das zusätzliche Muster bestätigt wird oder das bestätigte Muster geändert wird, sobald der Start- oder Endpunkt des Waschzyklus oder des Trocknungszyklus innerhalb des bestimmten Zeitbereichs eingegeben wird.

**6.** Wäschebehandlungsvorrichtung nach Anspruch 4, wobei die Steuereinheit (110) konfiguriert ist, die Einstellung des Start- oder Endpunkts in einem anderen bestimmten Zeitbereich zu bestätigen, wenn sich das zusätzliche Muster in das bestätige Muster ändert, wenn erfasst wird, dass nach der Bestätigung des Musters der Start- oder Endpunkt in dem anderen bestimmten Zeitbereich eingestellt wird.

**7.** Wäschebehandlungsvorrichtung nach Anspruch 1, wobei die Steuereinheit (110) konfiguriert ist, zwei oder mehr Start- oder Endpunkte zu ermitteln, die durch den Benutzer ausgewählt werden.

8. Wäschebehandlungsvorrichtung nach Anspruch 1, wobei auch dann, wenn der Start- oder Endpunkt des Waschzyklus oder Trocknungszyklus, der durch die Steuereinheit (110) ermittelt wurde, auf der Anzeige (130) angezeigt wird, das Eingabeteil (150) konfiguriert ist, eine Eingabe eines neuen Start- oder Endpunkts zu ermöglichen.

9. Wäschebehandlungsvorrichtung nach Anspruch 8, wobei die Steuereinheit (110) konfiguriert ist, den eingegebenen Start- oder Endpunkt beim Herausfinden des Musters zu verwenden, wenn der neue Start- oder Endpunkt beim Eingabeteil eingegeben wird.

10. Wäschebehandlungsvorrichtung nach Anspruch 1, die ferner Folgendes umfasst:

ein Kommunikationsmodul, das konfiguriert ist, Informationen zu übertragen, um zu ermöglichen, dass die Steuereinheit den Start- oder Endpunkt des Waschzyklus oder Trocknungszyklus mittels einer Kommunikation mit einem Server oder einem externen Endgerät ermittelt,
wobei die Steuereinheit (110) konfiguriert ist, den Start- oder Endpunkt auf der Basis der Informationen zu ermitteln, die vom Server oder vom externen Endgerät übertragen werden.

11. Wäschebehandlungsvorrichtung nach Anspruch 10, wobei die Steuereinheit (110) konfiguriert ist, den Start- oder Endpunkt des ausgeführten Betriebs an den Server oder das externe Endgerät über das Kommunikationsmodul zu übertragen, wenn der Start- oder Endpunkt des Betriebs eingestellt ist oder der Waschzyklus oder der Trocknungszyklus zu dem Zeitpunkt beendet ist, der als der Start- oder Endpunkt des Betriebs eingestellt ist.

**Revendications**

1. Appareil de traitement de linge configuré pour recommander un ou plusieurs éléments parmi un point de début et un point de fin d'un ou plusieurs cycles parmi un cycle de lavage destiné à retirer des substances étrangères du linge et un cycle de séchage destiné à éliminer l'humidité du linge, l'appareil de traitement de linge comportant :

une partie d'entrée (150) configurée pour recevoir une entrée destinée à définir un ou plusieurs éléments parmi le point de début et le point de fin du cycle de lavage ou du cycle de séchage, dans lequel la partie d'entrée (150) comporte une unité de demande de réservation (160c) pour recevoir une entrée d'un utilisateur afin de définir une heure de réservation ;
une commande (110) configurée pour déterminer un ou plusieurs éléments parmi le point de début et le point de fin du cycle de lavage ou du cycle de séchage en déterminant un modèle d'anciens points de début et de fin, lorsque l'entrée de la partie d'entrée (150) est détectée ; et
un affichage (130) configuré pour afficher un ou plusieurs éléments parmi le point de début et le point de fin du cycle de lavage ou du cycle de séchage déterminé par la commande (110) ;
dans lequel, lors de la détermination d'un ou plusieurs éléments parmi le point de début et le point de fin du cycle de lavage ou du cycle de séchage en déterminant le modèle sur la base d'anciens points de début et de fin, la commande est configurée pour :

- confirmer le modèle en détectant que les anciens points de début et de fin sont définis à une fréquence spécifique ou à une fréquence supérieure dans l'intervalle de temps spécifique, et
- dans lequel la commande (110) est configurée pour reconnaître ou s'attendre à l'heure de réservation que l'utilisateur souhaite définir et recommander une heure spécifique, en déterminant le modèle de définition d'heure de réservation de l'utilisateur sur la base d'un historique des anciennes définitions d'heure de réservation de l'utilisateur, et en estimant en conséquence l'heure de réservation que l'utilisateur définira.

2. Appareil de traitement de linge selon la revendication 1, dans lequel la commande (110) détermine simultanément un ou plusieurs éléments parmi le point de début et le point de fin en détectant l'entrée provenant de la partie d'entrée (150).

3. Appareil de traitement de linge selon la revendication 1, dans lequel la partie d'entrée (150) comporte :

l'unité de demande (160c) configurée pour recevoir une entrée destinée à faciliter la détermination, par la commande, d'un ou plusieurs éléments parmi le point de début et le point de fin,
dans lequel la commande (110) est configurée pour déterminer un ou plusieurs éléments parmi le point de début et le point de fin sur la base de la détection que l'unité de demande (160c) a reçu l'entrée.

4. Appareil de traitement de linge selon la revendication 1, dans lequel la commande (110) est configurée pour déterminer si un modèle supplémentaire est confirmé ou si le modèle confirmé est changé, après confirmation du modèle.

5. Appareil de traitement de linge selon la revendication 4, dans lequel la commande (110) est configurée pour ignorer le point de début ou de fin lors de la confirmation du modèle supplémentaire ou du changement du modèle confirmé, une fois que le point de début ou de fin du cycle de lavage ou du cycle de séchage sur l'intervalle de temps spécifique est entré.

6. Appareil de traitement de linge selon la revendication 4, dans lequel la commande (110) est configurée pour confirmer la définition du point de début ou de fin dans un intervalle de temps spécifique différent en tant que modèle supplémentaire ou changements du modèle confirmé, lors de la détection que le point de début ou de fin est défini dans l'intervalle de temps spécifique différent après la confirmation du modèle.

7. Appareil de traitement de linge selon la revendication 1, dans lequel la commande (110) est configurée pour déterminer deux ou plus de deux éléments parmi les points de début ou de fin qui sont sélectionnés par l'utilisateur.

8. Appareil de traitement de linge selon la revendication 1, dans lequel même lorsque le point de début ou de fin du cycle de lavage ou du cycle de séchage déterminé par la commande (110) est affiché sur l'affichage (130), la partie d'entrée (150) est configurée pour faciliter une entrée d'un nouveau point de début ou de fin.

9. Appareil de traitement de linge selon la revendication 8, dans lequel la commande (110) est configurée pour utiliser le point de début ou de fin entré dans la détermination du modèle, lorsque le nouveau point de début ou de fin est entré dans la partie d'entrée.

10. Appareil de traitement de linge selon la revendication 1, comportant en outre :

un module de communication configuré pour transmettre des informations destinées à faciliter la détermination, par la commande, du point de début ou de fin du cycle de lavage ou du cycle de séchage au moyen d'une communication avec un serveur ou un terminal externe,
dans lequel la commande (110) est configurée pour déterminer le point de début ou de fin sur la base des informations transmises à partir du serveur ou du terminal externe.

11. Appareil de traitement de linge selon la revendication 10, dans lequel la commande (110) est configurée pour transmettre le point de début ou de fin de l'opération exécutée au serveur ou au terminal externe via le module de communication, lorsque le point de début ou de fin de l'opération est défini ou lorsque le cycle de lavage ou le cycle de séchage s'est terminé à l'heure définie comme le point de début ou de fin de l'opération.

[Fig. 1]

(a)

(b)

(c)

(d)

[Fig. 2]

[Fig. 3]

[Fig. 4]

[Fig. 5]

(a)

(b)

[Fig. 6]

(a)                                                    (b)

[Fig. 7]

(a)

(b)

(c)

(d)

[Fig. 8]

[Fig. 9]

EP 3 918 124 B1

[Fig. 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3396051 A1
- US 2014222168 A1
- US 2018048152 A1